# EUROPEAN PATENT SPECIFICATION

(11) **EP 3 830 396 B1**
(45) Date of publication and mention of the grant of the patent: **27.10.2021**
(21) Application number: 18773706.9
(22) Date of filing: 05.09.2018
(51) Int. Cl.: F01D 11/02, F16J 15/44

(54) **NON-CONTACT SEAL WITH ANTI-ROTATION FEATURES**
BERÜHRUNGSFREIE DICHTUNG MIT VERDREHSICHERUNG
JOINT D'ÉTANCHÉITÉ SANS CONTACT DOTÉ D'ÉLÉMENTS ANTI-ROTATION

(43) Date of publication of application: 09.06.2021
(73) Proprietor: Siemens Energy Global GmbH & Co. KG, 81739 München (DE)
(72) Inventor: BAKER, Jonathon, Trail Clover, South Carolina 29710 (US); HALCHAK, William, Ft. Mill, South Carolina 29707 (US); ARRELL, Douglas J., Waxhaw, North Carolina 28173 (US); PASPULATI, Amit K., Charlotte, North Carolina 28277 (US); KELLY, Matthew, Stanley, North Carolina 28164 (US)
(74) Representative: Isarpatent
(86) International application number: PCT/US2018/049524
(87) International publication number: WO 2020/050834

(56) References cited:
- US-A1- 2011 121 519
- US-A1- 2015 322 816
- US-A1- 2016 130 963

## Description

### BACKGROUND

### 1. Field

The present invention relates to seals for sealing a circumferential gap between two machine components that are relatively rotatable with respect to each other, and, more particularly, to a seal having at least one shoe extending along one of the machine components in a position to create a non-contact seal therewith.

### 2. Description of the Related Art

Turbomachinery, such as gas turbine engines, currently is dependent on either labyrinth, brush or carbon seals for critical applications. Labyrinth seals provide adequate sealing, but they are extremely dependent on maintaining radial tolerances at all points of engine operation. The radial clearance must take into account factors such as thermal expansion, shaft motion, tolerance stack-ups, rub tolerance, etc. Minimization of seal clearance is necessary to achieve maximum labyrinth seal effectiveness. In addition to increased leakage if clearances are not maintained, there is the potential for increases in engine vibration. Straight-thru labyrinth seals are the most sensitive to clearance changes, with large clearances resulting in a carryover effect. Stepped labyrinth seals are very dependent on axial clearances, as well as radial clearances, which limits the number of teeth possible on each land. Pregrooved labyrinth seals are dependent on both axial and radial clearances, and must have an axial clearance less than twice the radial clearance to provide better leakage performance than stepped seals.

Turbomachinery, such as gas turbines engines, are becoming larger, more efficient, and more robust. Large blades and vanes are being utilized, especially in the hot section of the engine system. In view of high pressure ratios and high engine firing temperatures implemented in modern engines, certain components, such as airfoils, e.g., stationary vanes and rotating blades, require more efficient sealing capabilities than the ones that exist currently.

In current assemblies, clearance between the rotating and stationary components in turbomachinery are regions of low performance. There are several drivers of aerodynamic loss in the compressor-vane carrier, turbine-shroud cavity configuration, intermediate shaft, and the like, which lowers the turbomachinery's efficiency. One driver is the flow over the rotating components. The mixing losses that occur downstream of clearance areas are high and contribute to a reduction in stage efficiency and power. Additional mixing losses occur when the flow through the tip cavity combines with the main flow and the two streams have different velocities. Tip leakage is essentially lost opportunity for work extraction. Tip leakage also contributes towards aerodynamic secondary losses. A seal assembly is shown for example in the patent application US 2015/322816 which shows a hydrostatic advanced low leakage seal comprising a seal carrier that holds all the components of the seal assembly together along an outer ring; a primary seal comprising at least one shoe extending along one of the first and second machine components, producing a non-contact seal therewith, the shoe being formed with a slot; at least one spring element adapted to connect to one of the first and second machine components, and being connected to the at least one shoe, the at least one spring element being effective to deflect and move with the at least one shoe in response to fluid pressure applied to the at least one shoe by a fluid stream to assist in the creation of a primary seal of the circumferential gap between the first and second machine components.

### SUMMARY

In an aspect of the present invention, a seal assembly for sealing a circumferential gap between a first machine component and a second machine component which is rotatable relative to the first machine component about a longitudinal axis in the axial direction, comprises: a seal carrier that holds all the components of the seal assembly together along an outer ring; a primary seal comprising; at least one shoe extending along one of the first and second machine components, producing a non-contact seal therewith, the shoe being formed with a slot; at least one spring element adapted to connect to one of the first and second machine components and being connected to the at least one shoe, the at least one spring element being effective to deflect and move with the at least one shoe in response to fluid pressure applied to the at least one shoe by a fluid stream to assist in the creation of a primary seal of the circumferential gap between the first and second machine components; a mid plate comprising a groove, extending into the slot formed in the at least one shoe; at least one secondary seal comprising at least one sealing element oriented side-by side, the at least one sealing element is flush into the groove of the mid plate and extend into the slot formed in the at least one shoe, sealing the at least one spring element in the axial direction; and a front plate adjacent to the least one sealing element of the secondary seal and extending into the slot formed in the at least one shoe; wherein the at least one sealing element and the mid plate each have one of at least one pin, or at least one hole that collectively prevent rotation for the at least one sealing element within the seal assembly.

These and other features, aspects, and advantages of the present invention will become better understood with reference to the following drawings, description, and claims.

### BRIEF DESCRIPTION OF THE DRAWINGS

The invention is shown in more detail by help of figures. The figures show preferred configurations and do not limit the scope of the invention.
FIG. 1 is an exploded view of a seal assembly of an exemplary embodiment of the present invention;
FIG. 2 is an elevational view of a portion of an exemplary embodiment of seal assembly;
FIG. 3 is an elevational view of a portion of an exemplary embodiment of the present invention;
FIG. 4 is an elevational view of a portion of an exemplary embodiment of the present invention;
FIG. 5 is an elevational view of a portion of an exemplary embodiment of the present invention;
FIG. 6 is an elevational view of a portion of an exemplary embodiment of the present invention; and
FIG. 7 is an end view of a portion of an exemplary embodiment of the present invention.
FIG. 8 is a perspective view of a portion of an exemplary embodiment of the present invention.

### DETAILED DESCRIPTION

In the following detailed description of the preferred embodiment, reference is made to the accompanying drawings that form a part hereof, and in which is shown by way of illustration, and not by way of limitation, a specific embodiment in which the invention may be practiced. It is to be understood that other embodiments may be utilized, and that changes may be made without departing from the scope of the present invention.

Broadly, an embodiment of the present invention provides a seal assembly for sealing a circumferential gap between a first machine component and a second machine component which is rotatable relative to the first machine component about a longitudinal axis. The seal assembly includes a seal carrier, a primary seal, a mid plate, at least one secondary seal, and a front plate. The at least one secondary seal includes at least one sealing element. The at least one sealing element and the mid plate each have one of at least one pin or at least one hole that collectively prevent rotation for the at least one sealing element within the seal assembly.

Turbomachinery typically includes a compressor section, a combustor, and a turbine section. The compressor section ingests ambient air and compresses it. The compressed air from the compressor section enters one or more combustors in the combustor section. The compressed air is mixed with fuel in the combustors, and an air-fuel mixture is combusted in the combustors to form a hot working gas. The hot working gas is routed to the turbine section, where it is expanded through alternating rows of stationary airfoils and rotating airfoils, and used to generate power that can drive a rotor. The expanded gas exiting the turbine section then exhausts from the engine via an exhaust section.

The compressor and turbine sections may include several locations in which there may be gaps, or clearances, between the rotating and stationary components. During engine operation, system loss may occur through fluid leakage through clearances in the compressor and turbine sections. This system loss decreases the operational efficiency of the system. An example of the flow leakage is across a clearance between the tips of rotating blades and a surrounding stationary structure or boundary, such as an outer shroud or a vane carrier.

Seals are necessary to prevent leakage across areas within the gas turbine engine. A non-contact seal with anti-rotational features that seals a circumferential gap between a first machine component and a second machine component is desired.

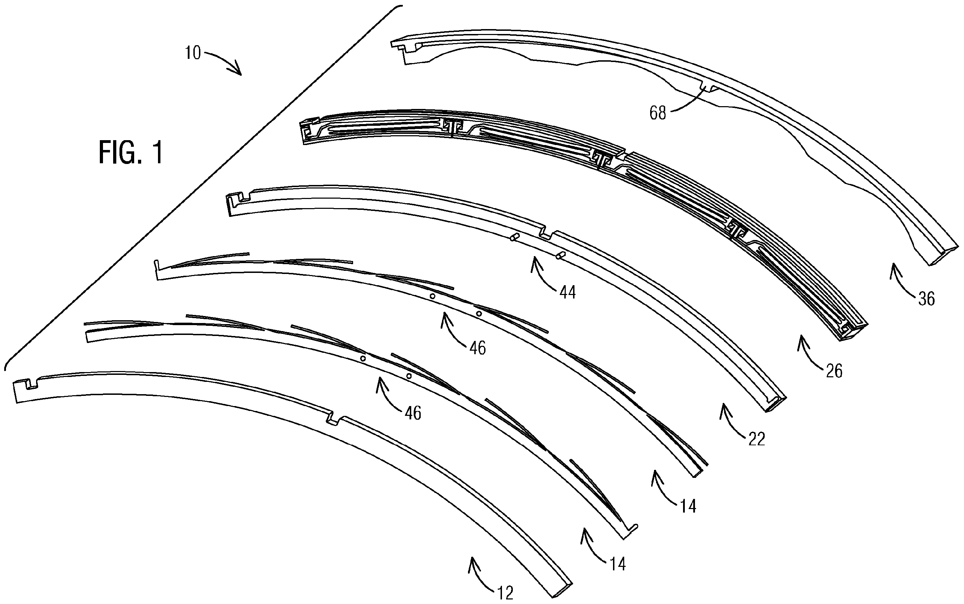

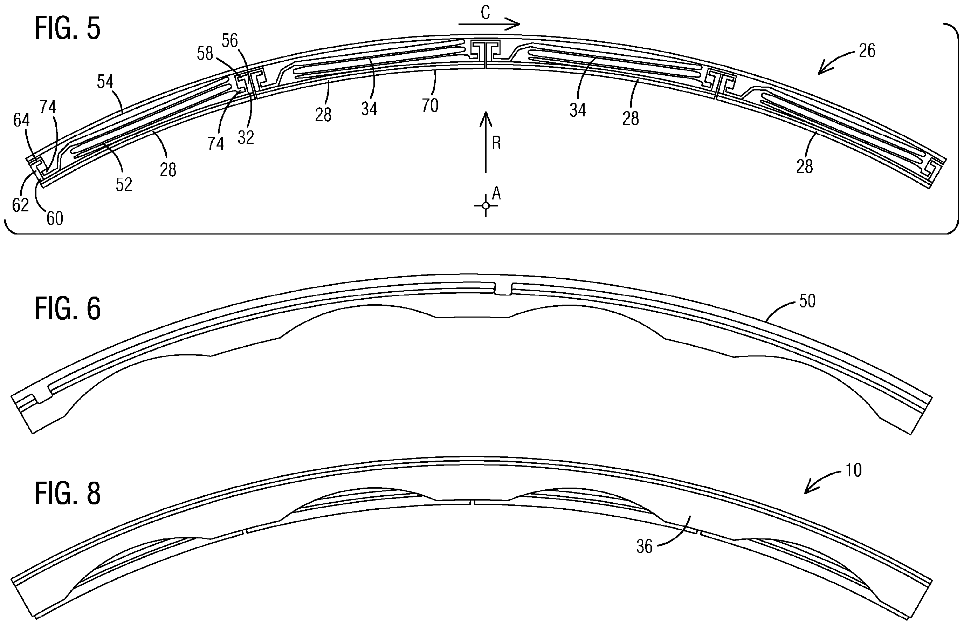

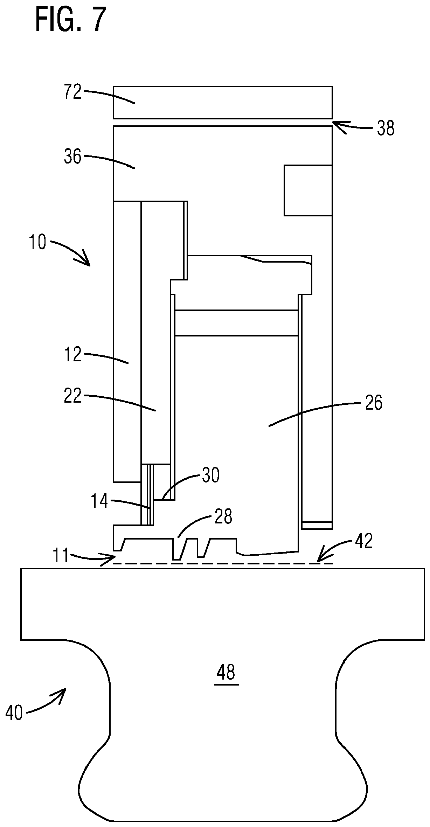

FIG. 1 shows an exploded view of a seal assembly 10 embodiment that may be included in turbomachinery, such as a gas turbine. FIG. 7 and FIG. 8 show the seal assembly 10 in its assembled form. The seal assembly 10 may include a front plate 12, at least one secondary seal 14, a mid plate 22, a primary seal 26, and a seal carrier 36. The assembled seal assembly 10 illustrated in FIG. 7 creates a non-contact seal of a circumferential gap 11 between two components, a first machine component 38 and a second machine component 40, such as a fixed stator 72 and a rotating rotor 48.

Each seal assembly 10 includes at least one, and in some situations, a plurality of circumferentially spaced shoes 28 that are located in a non-contact position along an exterior surface of the rotor 48, as part of the primary seal 26. Each shoe 28 has a sealing surface 70 and a slot 30 that extends radially inward toward the sealing surface 70 as can be seen in FIG. 1. The at least one shoe 28 is formed with two or more projections 78, or fins, relative to one of the machine components, and is the bottom portion of the primary seal 26, as can be seen in FIG. 5. For purposes of this discussion, the term "axial" or "axially spaced" refers to a direction along the longitudinal axis 42 of the stator 72 and rotor 48, whereas "radial" refers to a direction perpendicular to the longitudinal axis 42. The seal assembly 10 may extend along a circumferential direction C relative to the turbine longitudinal axis 42.

In certain operating conditions, especially at higher pressures, it is desirable to limit the extent of radial movement of the shoes 28 with respect to the rotor 48 to maintain clearances, e.g. the spacing between the shoes 28, and the facing surface of the rotor 48. The primary seal 26 may include a number of circumferentially spaced spring elements, or at least one spring element 34, as can be better seen in FIG. 5. Each spring element 34 is formed with an inner band 52, and an outer band 54 radially outwardly spaced from the inner band 52. One end of each of the bands 52 and 54 is mounted to, or integrally formed with, the stator 72 and the opposite end thereof is connected to a first stop 32. The first stop 32 includes a leg 56 which is connected to, or integrally formed with a shoe 28, and an arm 58 opposite to the shoe 28, which may be received within a recess formed in the stator 72. The recess has a shoulder 74 positioned in alignment with the arm 58 of the first stop 32.

A second stop 60 is connected to, or integrally formed with, the shoe 28. The second stop 60 is circumferentially spaced from the first stop 32 in a position near the point at which the inner and outer bands 52 and 54 connect to the stator 72. The second stop 60 is formed with a leg 62 and an arm 64. The arm 64 may be received within a recess in the stator 72. The recess has a shoulder 74 positioned in alignment with the arm 64 of the second stop 60.

In certain situations, when seal assembly embodiments are used in applications such as gas turbine engines, aerodynamic forces are developed that can apply a fluid pressure to the shoe 28, causing it to move radially inwardly toward the rotor 48. The spring elements 34 deflect, and move with the shoe 28, to create a primary seal of the circumferential gap 11 between the rotor 48 and stator 72, for instance. The first and second stops 32 and 60 can limit the extent of radially inward and outward movement of the shoe 28, with respect to the rotor 48 in the radial direction R. A gap is provided between the arm 58 of the first stop 32, and the shoulder, and between the arm 64 of the second stop 60, and the shoulder, such that the shoe 28 can move radially inwardly relative to the rotor 48. The inward motion mentioned above is limited by engagement of the arms with the shoulders to prevent the shoe 28 from contacting the rotor 48, or exceeding design tolerances for the gap between the two. The arms can also contact the stator 72 in the event that the shoe 28 moves radially outwardly relative to the rotor 48, to limit movement of the shoe 28 in that direction.

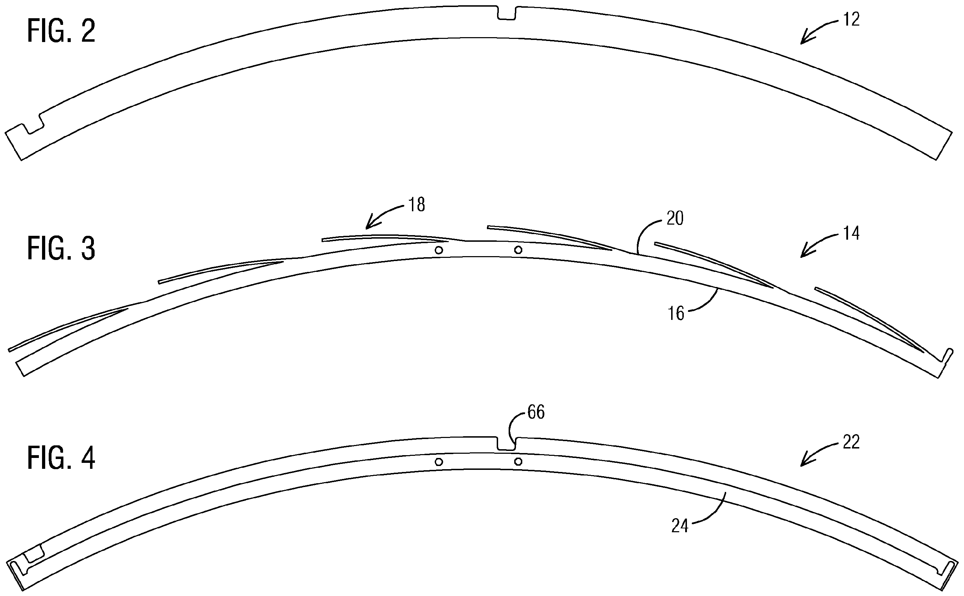

Embodiments include at least one secondary seal 14, that includes at least one sealing element 16, or plates. At least one spring member 18 can be positioned radially outward from the plate, as is shown in FIG. 3, along an outer ring surface 20. In certain embodiments, the at least one sealing element 16 includes two sealing elements 16 oriented side-by-side and positioned so that the plate segments extend into the slot 30 of the at least one shoe 28. The at least one sealing element 16 help to radially deflect and move with the at least one shoe 28, in response to the application of fluid pressure to the at least one shoe 28, in a way that assists in the creation of a secondary seal 14 of the circumferential gap 11 between the first and second machine components 38 and 40. In certain embodiments, the at least one secondary seal 14 includes an aft secondary seal and a forward secondary seal that may be identical and reversed at assembly.

FIG. 4 shows a mid plate 22. The mid plate 22 includes at least one groove 24 along a face of the mid plate 22 that extends into the slot 30 formed in the at least one shoe 28, and is positioned between the at least one secondary seal 14 and the at least one shoe 28 of the primary seal 26. The sealing elements 16 of the at least one secondary seal 14 fits into the groove 24 of the mid plate 22.

FIG. 2 shows a front plate 12. The front plate 12 can be used to cover the components of the seal assembly 10 in the axial direction A. The seal assembly 10 may include having the at least one secondary seal clamped between the front plate 12 and the mid plate 22. The primary seal 26 may support the inner diameter of the secondary seal 14, and the mid plate 22 can support the outer diameter of the secondary seal 14. During operation, the spring member 18 of the secondary seal 14 may react against the mid plate 22.

FIG. 6 shows a seal carrier 36. The seal carrier 36 holds all the components of the seal assembly 10 together along a radially outward position of a radially outer ring 50 of the seal carrier 36. In certain embodiments, along the radially outward surface of the primary seal 26, the mid plate 22, and the front plate 12, there may be a cutout 66. The seal carrier 36, in these embodiments, has a protruding edge 68 that extends radially inward that aligns with the cutouts 66 of the other components to help the components to align in the relative area.

Traditionally, during operation there is no locking mechanism in place for any secondary seals 14. Further, the secondary seals 14 are difficult to keep in place during assembly of the seal assembly 10. Therefore, in the embodiments discussed here, the secondary seals 14 are circumferentially pinned to reduce wear concerns of the secondary seal 14 and to facilitate ease of assembly. The pinning is only for the circumferential direction C, so the seal would be free to move in the radial direction R. In an embodiment, at least one pin 44 is added to the mid plate 22. At least one hole 46, opposite the at least one pin 44, can be placed on the at least one secondary seal 14. The at least one pin 44 can be welded to the mid plate 22. The at least one hole 46 may be put through the at least one secondary seal 14 in a circular shape, oval shape, U shaped, or other similar geometry. The shape of the at least one hole 46 determines how much play may be allowed from the secondary seals 14. The pinning of the at least one secondary seal 14 also helps in the installation of the seal assembly 10, since the secondary seal 14 can only move in the radial direction R, versus movement in the circumferential direction C. In other embodiments, the at least one pin 44 may be added to the at least one secondary seal 14 and the at least one hole 46 may be put through the mid plate 22.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only, and not limiting as to the scope of the invention, which is to be given the full breadth of the appended claims.

## Claims

1. A seal assembly (10) for sealing a circumferential gap (11) between a first machine component (38) and a second machine component (40) which is rotatable relative to the first machine component (38) about a longitudinal axis (42) in the axial direction (A), comprising:
a seal carrier (36) that holds all the components of the seal assembly (10) together along an outer ring (50);
a primary seal (26) comprising:
at least one shoe (28) extending along one of the first and second machine components (38, 40), producing a non-contact seal therewith, the shoe (28) being formed with a slot (30);
at least one spring element (34) adapted to connect to one of the first and second machine components (38, 40), and being connected to the at least one shoe (28), the at least one spring element (34) being effective to deflect and move with the at least one shoe (28) in response to fluid pressure applied to the at least one shoe (28) by a fluid stream to assist in the creation of a primary seal of the circumferential gap (11) between the first and second machine components (38, 40);
a mid plate (22) comprising a groove (24), extending into the slot (30) formed in the at least one shoe (28);
at least one secondary seal (14) comprising at least one sealing element (16) oriented side-by-side, the at least one sealing element (16) is flush into the groove (24) of the mid plate (22) and extend into the slot (30) formed in the at least one shoe (28), sealing the at least one spring element (34) in the axial direction (A); and
a front plate (12) adjacent to the at least one sealing element (16) of the secondary seal (14) and extending into the slot (30) formed in the at least one shoe (28);
wherein the at least one sealing element (16) and the mid plate (22) each have one of at least one pin (44), or at least one hole (46) that collectively prevent rotation for the at least one sealing element (16) within the seal assembly (10).

2. The seal assembly (10) according to claim 1, wherein the at least one secondary seal (14) comprises at least one spring member (18) mounted along an outer ring surface (20) of the at least one sealing element (16).

3. The seal assembly (10) according to claims 1 or 2, wherein the at least one pin (44) is only in the axial direction (A), the secondary seal (14) to move freely in the radial direction.

4. The seal assembly (10) according to one of claims 1 through 3, wherein the at least one slot (46) has an oval shape viewed from the axial direction (A).

5. The seal assembly (10) according to one of claims 1 through 3, wherein the at least one slot (46) is U-shaped viewed from the axial direction (A).

6. The seal assembly (10) according to one of claims 1 through 3, wherein the at least one pin (44) is attached to the mid plate (22).

7. The seal assembly (10) according to one of claims 1 through 5, wherein the at least one pin (44) is attached to the at least one secondary seal (14).

## Patentansprüche

1. Dichtungsanordnung (10) zum Abdichten eines umlaufenden Spalts (11) zwischen einer ersten Maschinenkomponente (38) und einer zweiten Maschinenkomponente (40), die bezüglich der ersten Maschinenkomponente (38) um eine Längsachse (42) in der axialen Richtung (A) drehbar ist, umfassend:
einen Dichtungsträger (36), der alle Komponenten der Dichtungsanordnung (10) entlang eines äußeren Rings (50) zusammenhält,
eine primäre Abdichtung (26), die Folgendes umfasst:
mindestens einen Schuh (28), der sich entlang einer der ersten und der zweiten Maschinenkomponente (38, 40) erstreckt und eine berührungslose Dichtung damit herstellt, wobei der Schuh (28) mit einem Schlitz (30) ausgebildet ist,
mindestens ein Federelement (34), das dazu ausgeführt ist, mit einer der ersten und der zweiten Maschinenkomponente (38, 40) verbunden zu werden, und mit dem mindestens einen Schuh (28) verbunden ist, wobei das mindestens eine Federelement (34) dahingehend wirksam ist, als Reaktion auf Fluiddruck, der von einem Fluidstrom auf den mindestens einen Schuh (28) ausgeübt wird, mit dem mindestens einen Schuh (28) abgelenkt zu werden und sich dementsprechend zu bewegen, um zu der Herstellung einer primären Abdichtung des umlaufenden Spalts (11) zwischen der ersten Maschinenkomponente (38) und der zweiten Maschinenkomponente (40) beizutragen,
eine Mittelplatte (22), die eine Nut (24) umfasst, die sich in den in dem mindestens einen Schuh (28) ausgebildeten Schlitz (30) erstreckt,
mindestens eine sekundäre Abdichtung (14), die mindestens ein nebeneinander ausgerichtetes Dichtungselement (16) umfasst, wobei das mindestens eine Dichtungselement (16) bündig in der Nut (24) der Mittelplatte (22) liegt und sich in den in dem mindestens einen Schuh (28) ausgebildeten Schlitz (30) erstreckt und das mindestens eine Federelement (34) in der axialen Richtng (A) abdichtet, und
eine Vorderplatte (12), die dem mindestens einen Dichtungselement (16) der sekundären Abdichtung (14) benachbart ist und sich in den in dem mindestens einen Schuh (28) ausgebildeten Schlitz (30) erstreckt,
wobei das mindestens eine Dichtungselement (16) und die Mittelplatte (22) jeweils mindestens einen Stift (44) oder mindestens ein Loch (46) haben, die gemeinsam die Drehung für das mindestens eine Dichtungselement (16) in der Dichtungsanordnung (10) verhindern.

2. Dichtungsanordnung (10) nach Anspruch 1, wobei die mindestens eine sekundäre Abdichtung (14) mindestens ein Federglied (18) umfasst, das entlang einer äußeren Ringfläche (20) des mindestens einen Dichtungselements (16) montiert ist.

3. Dichtungsanordnung (10) nach Ansprüchen 1 oder 2, wobei der mindestens eine Stift (44) nur in der axialen Richtung (A) ist, die sekundäre Abdichtung (14) sich frei in der radialen Richtung bewegt.

4. Dichtungsanordnung (10) nach einem der Ansprüche 1 bis 3, wobei der mindestens eine Schlitz (46) aus der axialen Richtung (A) gesehen eine ovale Form hat.

5. Dichtungsanordnung (10) nach einem der Ansprüche 1 bis 3, wobei der mindestens eine Schlitz (46) aus der axialen Richtung (A) gesehen U-förmig ist.

6. Dichtungsanordnung (10) nach einem der Ansprüche 1 bis 3, wobei der mindestens eine Stift (44) an der Mittelplatte (22) angebracht ist.

7. Dichtungsanordnung (10) nach einem der Ansprüche 1 bis 5, wobei der mindestens eine Stift (44) an der mindestens einen sekundären Abdichtung (14) angebracht ist.

## Revendications

1. Ensemble de joints d'étanchéité (10) pour étanchéifier un espace circonférentiel (11) entre un premier composant de machine (38) et un second composant de machine (40) qui est rotatif relativement au premier composant de machine (38) autour d'un axe longitudinal (42) dans la direction axiale (A), comprenant :
un support de joint d'étanchéité (36) qui retient tous les composants de l'ensemble de joints d'étanchéité (10) ensemble le long d'une bague extérieure (50) ;
un joint d'étanchéité primaire (26) comprenant :
au moins un sabot (28) s'étendant le long d'un des premier et second composants de machine (38, 40), produisant un joint d'étanchéité sans contact avec celui-ci, le sabot (28) étant formé avec une fente (30) ;
au moins un élément à ressort (34) adapté pour se raccorder à un des premier et second composants de machine (38, 40), et raccordé à l'au moins un sabot (28), l'au moins un élément à ressort (34) étant efficace pour se défléchir et se déplacer avec l'au moins un sabot (28) en réponse à une pression de fluide appliquée sur l'au moins un sabot (28) par un courant de fluide pour assister la création d'un joint d'étanchéité primaire de l'espace circonférentiel (11) entre les premier et second composants de machine (38, 40) ;
une plaque médiane (22) comprenant une rainure (24), s'étendant dans la fente (30) formée dans l'au moins un sabot (28) ;
au moins un joint d'étanchéité secondaire (14) comprenant au moins un élément d'étanchéité (16) orientés côte-à-côte, l'au moins un élément d'étanchéité (16) est aligné dans la rainure (24) de la plaque médiane (22), et s'étend dans la fente (30) formée dans l'au moins un sabot (28), étanchéifiant l'au moins un élément à ressort (34) dans la direction axiale (A) ; et
une plaque avant (12) adjacente à l'au moins un élément d'étanchéité (16) du joint d'étanchéité secondaire (14) et s'étendant dans la fente (30) formée dans l'au moins un sabot (28) ;
dans lequel l'au moins un élément d'étanchéité (16) et la plaque médiane (22) ont chacun un d'au moins une goupille (44), ou d'au moins un trou (46) qui empêchent collectivement la rotation pour l'au moins un élément d'étanchéité (16) à l'intérieur de l'ensemble de joints d'étanchéité (10).

2. Ensemble de joints d'étanchéité (10) selon la revendication 1, dans lequel l'au moins un joint d'étanchéité secondaire (14) comprend au moins un organe à ressort (18) monté le long d'une surface de bague extérieure (20) de l'au moins un élément d'étanchéité (16).

3. Ensemble de joints d'étanchéité (10) selon les revendications 1 ou 2, dans lequel l'au moins une goupille (44) est seulement dans la direction axiale (A), le joint d'étanchéité secondaire (14) étant destiné se déplacer librement dans la direction radiale.

4. Ensemble de joints d'étanchéité (10) selon l'une des revendications 1 à 3, dans lequel l'au moins une fente (46) a une forme ovale en vue depuis la direction axiale (A).

5. Ensemble de joints d'étanchéité (10) selon l'une des revendications 1 à 3, dans lequel l'au moins une fente (46) est en forme de U en vue depuis la direction axiale (A).

6. Ensemble de joints d'étanchéité (10) selon l'une des revendications 1 à 3, dans lequel l'au moins une goupille (44) est attachée à la plaque médiane (22).

7. Ensemble de joints d'étanchéité (10) selon l'une des revendications 1 à 5, dans lequel l'au moins une goupille (44) est attachée à l'au moins un joint d'étanchéité secondaire (14).
